# EUROPEAN PATENT SPECIFICATION

(11) **EP 1 881 203 B1**
(45) Date of publication and mention of the grant of the patent: **13.10.2010**
(21) Application number: 06425517.7
(22) Date of filing: 21.07.2006
(51) Int. Cl.: F15B 13/04, F15B 13/042

(54) **Hydraulically actuated valve and a hydraulic circuit for activating a brake**
Hydraulisch betätigtes Ventil und Hydrauliksystem zur Betätigung einer Bremse
Soupape pilotée et système hydraulique d'actionnement de frein

(43) Date of publication of application: 23.01.2008
(73) Proprietor: Bosch Rexroth Oil Control S.p.A., 20149 Milano (MI) (IT)
(72) Inventor: Storci, Andrea, 41015 Nonantola (Modena) (IT)
(74) Representative: Gotra, Stefano

(56) References cited:
- JP-A- 3 063 328
- US-A- 4 802 505

## Description

Machines provided with mobile organs for performing determined work operations, such as for example digger arms or lift arms and rotating turrets supporting the arms, are provided with safety brakes that when the machine is halted and not working, and/or when no command has been given to the mobile organs, block the mobile organs so that they cannot move by effect of their own weight or because of casual knocks or displacements of the machines.

The safety brake is generally activated by a single-acting hydraulic actuator which in the absence of pressurised fluid supply thereto activates the brake in an operative configuration in which the mobile organ is blocked, while in the presence of pressurised fluid the brake is released.

The pressurised fluid supply to the brake is usually controlled via a hydraulically piloted slide valve. This valve, which is interpositioned between a pressurised fluid source and the brake actuator, is generally a three-way two-position valve. In a first position the valve connects the fluid source to the brake actuator, the brake then moving into a non-braking position. In a second position the valve connects the brake actuator with a discharge conduit and the brake shifts into a braking configuration.

Document JP 3063328 discloses a known circuit for controlling a brake. A solenoid valve for disengaging a brake is located in the middle of an oil passage running between a pilot pump and a slewing brake device to disengage a brake only when an oil pressure is fed from the pump. A pulse generating encoder is provided for intermittently opening and closing the solenoid valve through output of a given pulse waveform signal by means of a command from a controller and intermittently disengaging a brake. A stress accumulated by means of a lateral load is intermittently escaped by disengaging a brake, a slewing device is prevented from a strain and damage, and natural slewing in the downward direction of a slop due to total disengagement of the brake is prevented from occurring

The safety brake is a component which is particularly subject to wear and/or damage when it acts on moving organs. For this reason the brake activation must respect some relatively precise conditions. In particular it must be very rapid in opening, so that the mobile organ is free to move as soon as a command to move is given. On the other hand the brake must be relatively slow in its closing action, so that it enters into action only when the mobile organ has already been stopped following a command to do so. When there is a stop command to the mobile organ, the brake actuator is placed in connection with a low-pressure discharge conduit so that the single-acting actuator, by discharging the previously-received fluid, shifts the brake into a braking configuration. The slowed closure of the brake is usually obtained by providing a delivery-limiter component, typically constituted by one or more chokes, on the discharge conduit.

Brake control safety devices of known type exhibit some drawbacks. Firstly they require the presence of a conduit for supplying the pilot fluid to the slide valve and a discharge conduit for actuating the brake. This leads to the realisation of relatively complex hydraulic circuits, often problematic to arrange on board the machines. Further, the fact that the conduit for supplying the pilot fluid to the slide valve and the discharge conduit for the brake actuator are distinct does not exclude the possibility that, in the case of breakdown or faulty operation, the slide valve will be supplied with the pilot fluid, determining the sending of pressurised fluid to the brake actuator, and that at the same time the actuator will be connected to the discharge conduit. In other words a situation might arise in which, in the presence of an operational command to the mobile organ commanding the opening of the safety brake, the brake may not open as the actuator is connected to the discharge conduit.

An example of know device is disclosed in US 4802505, wherein a flow-control valve has a valve housing defining a chamber formed with axially offset source, sump, and user ports. A valve body in the chamber has first and second coaxial but axially independently movable parts, the first part having a mainly axial throughgoing passage having one end exposed continuously to one of the source and sump ports and an opposite axially open end axially sealingly engageable with the second valve part. A central seat between the source and sump ports is axially sealingly engageable with one of the valve parts to isolate one of the source and sump ports from the other of the source and sump ports. The parts are displaceable between one end position permitting flow in the chamber between the user and the other port while blocking flow between same and the one port with the valve parts in sealing engagement with each other and the one valve part out of engagement with the central seat, an intermediate position blocking flow in the chamber between the ports with the valve parts in sealing engagement with each other with the one valve part in sealing engagement with the central seat, and a drain end position permitting flow in the chamber between the user and one port while blocking flow between same and the other port.

The main aim of the present invention is to provide a device and a hydraulic circuit for activating a brake which overcomes the drawbacks in the devices of known type.

An advantage of the device of the invention is that it enables particularly simple and compact circuits to be realised.

A further advantage of the device is that is offers intrinsic security against erroneous operational configurations, in which the brake actuator is connected to the discharge and the source of the pressurised fluid at the same time.

Further characteristics and advantages will better emerge from the detailed description that follows, made with reference to the accompanying figures of the drawings, provided by way of non-limiting example, and in which:

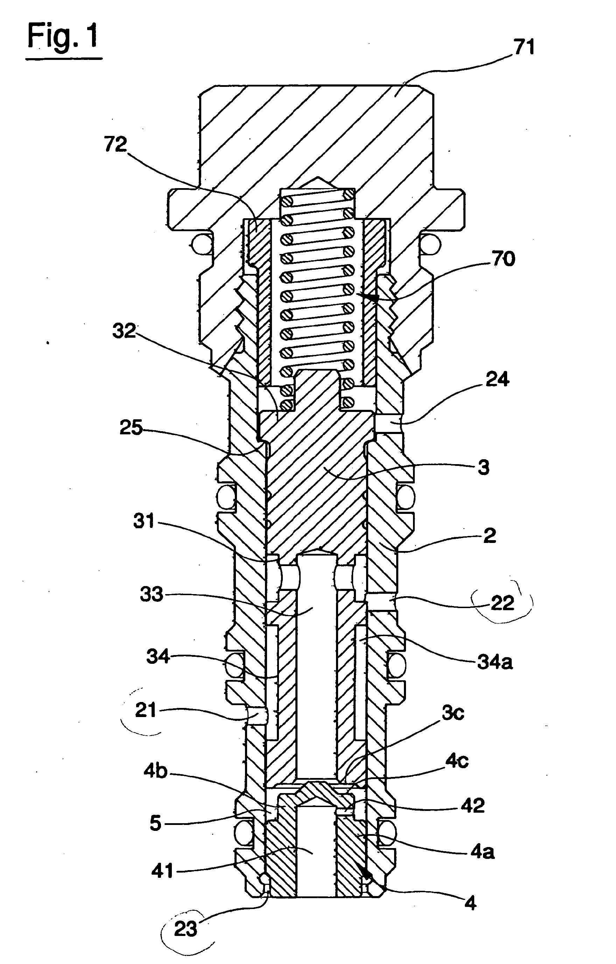

- figure 1 is a sectioned view of the device of the present invention;
- figures 2,3,4 show the device of figure 1 in three different operational configurations, in combination with a circuit for brake control and a circuit for activating a mobile organ;
- figure 5 is a time/pressure graph qualitatively representing the progress of the pressure at different apertures of the device in the various operational stages thereof;
- figure 6 is the circuit of figures 2, 3, 4 with an electromechanical component in substitution for a hydraulic component.

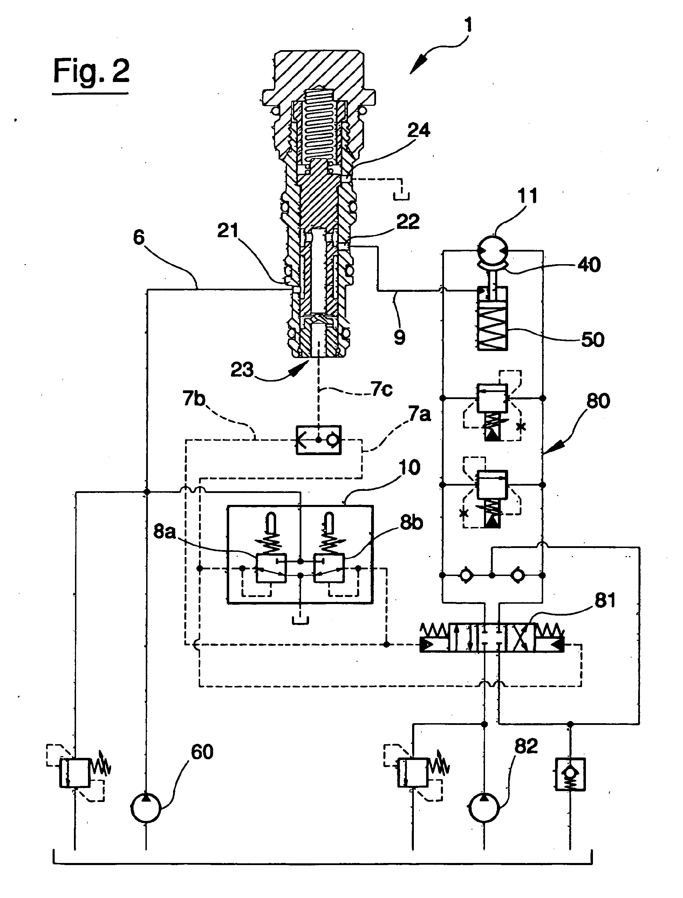

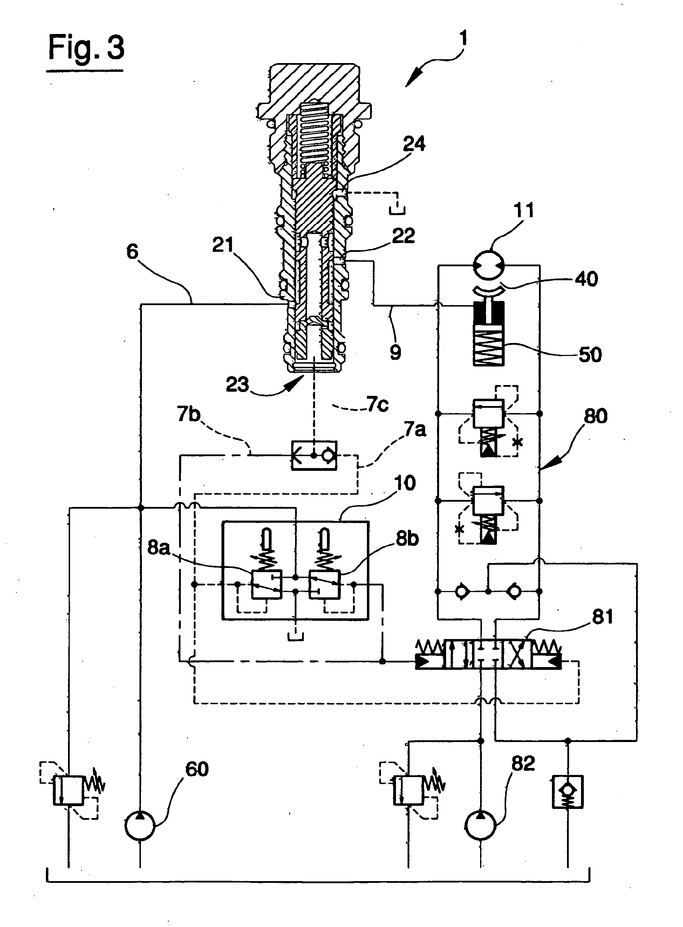

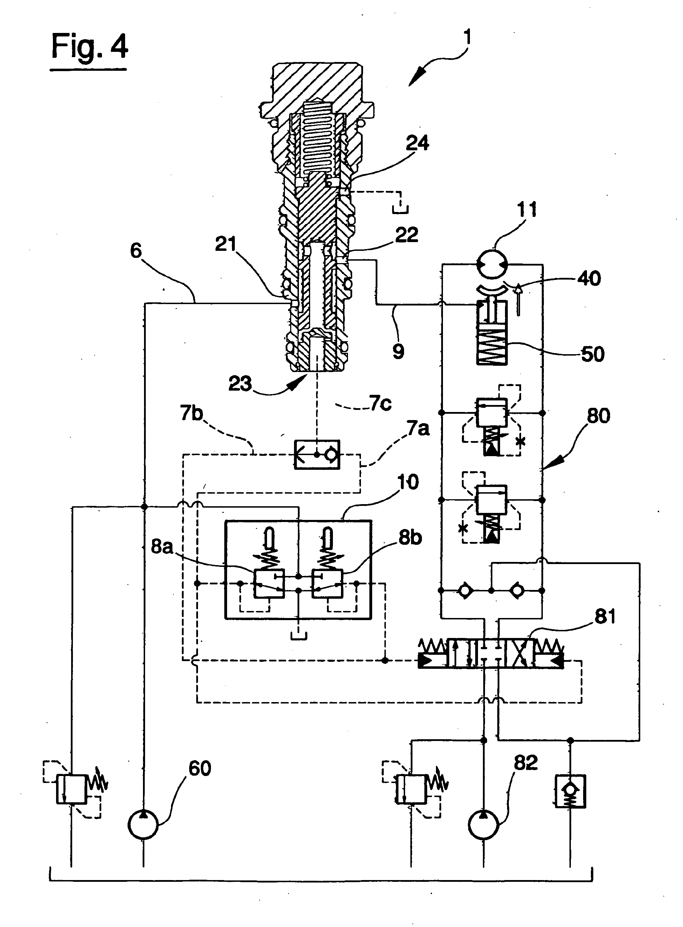

In a preferred embodiment of the device of the invention, a brake activation circuit 40 is included, which acts on a mobile organ 11, which by way of example is represented as a rotary hydraulic actuator. The brake 40 is activatable, by means of a single-acting hydraulic actuator 50, between a braking configuration (figure 2) in which it obstructs movement of the mobile organ 11, and a non-braking configuration (figures 3 and 4), in which it does not obstruct the movement of the mobile organ. In a rest condition, or in the absence of commands, the brake 40 is maintained, by the actuator 50, in the braking configuration by effect of the thrust exerted by elastic means. When a command is given, pressurised fluid is sent to the actuator 50 which activates the brake 40 into the non-braking configuration.

The mobile organ 11 is activated by a circuit 80, of known type, comprising two branches predisposed to supply pressurised fluid to the mobile organ 11. A four-way three-position distributor 81 enables on command a connection of one of the two branches of the circuit 80 with a pump 82 and the other branch of the two branches with a discharge, so as to cause a displacement of the mobile organ 11 in opposite directions. The distributor 81 can be commanded either hydraulically or electrically.

Control of the distributor 81 is generally done via a command organ 10, a lever or a joystick, which internally exhibits at least a slide valve, if the distributor 81 is hydraulically controlled, or a modulable switch, if the distributor 81 is electrically controlled.

With reference to the accompanying figures of the drawings, the hydraulic device according to a preferred embodiment of the invention comprises a hollow body 2 which exhibits an internal cavity which is substantially cylindrical and is provided with a longitudinal axis x. The hollow body 2 is provided with a first opening 21 for connection to a pressurised fluid source 60, a second opening 22, for connection to the actuator 50 for activating the brake 40, and a third opening 23 which on command can be connected to a discharge conduit or a pressurised fluid source which can be different from or the same as the source 60. A cylindrical obturator 3, is commandably mobile internally of the hollow body 2 between at least a first position, in which the first opening 21 and the second opening 22 are not connected to one another, and at least a second position, in which the obturator 3 connects the first opening 21 and the second opening 22. In particular, the obturator 3 is sealedly slidable along the longitudinal axis x, within the internal cavity of the hollow body 2.

The obturator 3 is provided with a through-channel 33 which develops axially internally of the obturator 3 between a striker surface 3c, positioned at an end of the obturator 3, and a first annular recess 31 provided on the obturator 3. The first annular recess 31 is positioned in such a way as at least partially to face the second opening 22 when the obturator 3 is in the first position thereof.

The obturator 3 is further provided externally with a second annular recess 34 which, together with the internal surface of the hollow body 2, delimits an annular chamber 34a. The annular recess 31 extends axially by an amount which is sufficient to enable the above-cited annular chamber 34a to face the first opening 21 and the second opening 22 when the obturator 3 is in the second position, and only the first opening 21 when the obturator 3 is in the first position. Thus when the obturator 3 is in the second position, the first opening 21 and the second opening 22 are in communication with one another through the annular chamber 34a. When the obturator 3 is in the first position, the pressurised fluid sent by the source 60 is confined internally of the annular channel 34a.

Means for pushing 70 the obturator 3 are provided, to shift the obturator 3 from the second towards the first position. The means 70 are constituted preferably by a helix spring housed internally of a chamber defined between a cap 71, associated to the hollow body 2, and the obturator 3. A breather hole 24 is afforded in the hollow body 2 to place the housing chamber of the helix spring in communication with outside the device and to prevent the chamber from filling with fluid, thus preventing the spring from compressing. At ends thereof, the spring 70 is in contact with the cap 71 and a shoulder 32, positioned at an end of the obturator 3, which shoulder 32 further defines the first and the second positions of the obturator 3. In the second position of the obturator 3 the shoulder 32 abuts against a sleeve 72 which is coaxial to the helix spring. In the first position of the obturator 3 the shoulder 32 strikes against a counter-seating 25 which projects internally of the hollow body 2.

The device further comprises a pilot element 4 predisposed to push the obturator 3 from the first towards the second position. The pilot element 4 is mobile internally of the hollow body 2 between at least a first position, in which it is not in contact with the obturator 3 and the obturator 3 is free to assume the first position, and at least a second position, in which it is in contact with the obturator 3 and can shift the obturator 3 into the second position thereof. The pilot element 4 is conformed in such a way that, if it is not in contact with the obturator 3, it places the through-channel 33, and therefore the second opening 22, in connection with the third opening 23. For this purpose the pilot element 4 is provided with a through-conduit 41, provided with a choke 42, through which the through-channel 33 and the third opening 23 can communicate.

In more detail, the pilot element 4 comprises a first portion 4a, sealedly slidable in the hollow body 2, and a second portion 4b, distanced with respect to an internal surface of the hollow body 2, which delimits, in cooperation with the internal surface of the hollow body 2, an annular chamber 5. The annular chamber 5 is positioned between the obturator 3 and the pilot element 4 and the through-conduit 41 opens out into the annular chamber 5. A front surface 4c of the pilot element 4 is predisposed to abut against a striker surface 3c of the obturator 3 in order to close the annular chamber 5 with respect to the second opening 22. The through-conduit 41 comprises a first tract, arranged axially, and a second tract, constituted by the choke 42, which opens into the annular chamber 5. In this way, when the pilot element 4 and the obturator 3 are not in reciprocal contact, the annular chamber 5 is in communication with the through-channel 33 and thus with the second opening 22.

The connection between the second opening 22 and the third opening 23 is completed via the through-channel 33 the obturator 3 is provided with. This through-channel 33 develops axially internally of the obturator 3 and extends between the striker surface 3c and the first annular recess 31 the obturator 3 is provided with, which is positioned in such a way that it at least partially faces the second opening 22 when the obturator 3 is in the first position.

The device operates as follows.

In an initial rest configuration of the device, there is no activating command to open the brake 40 and the brake is therefore in the braking configuration (figure 2). In this condition the obturator 3, by effect of the push of the spring 70, is in the first position in which the second opening 22, which is connected to the actuator 50 for activating the brake, is in communication with the third opening 23 via the through-channel 33 of the obturator 3, the annular chamber 5 and the through-conduit 41 of the pilot element 4.

Starting from this initial configuration, an "open" command is sent to the brake 40, which might be done for example on starting up the machine when a work command is sent to the mobile organ 11, represented by the rotary actuator, on which the brake 40 operates (figure 3). As will be more fully described herein below, an opening command leads to sending a pilot pressure to the pilot element 4 through the third opening 23. The pilot pressure, at values of about 4 bar, pushes the pilot element 4 towards the second position in which it is in contact with the obturator 3 at the front surface 4c of the pilot element 4 and closes the connection between the annular chamber 5 and the through-channel 33, thus closing the connection with the second opening 22. The pilot element 4 pushes the obturator 3 into the second position thereof in which the second opening 22 is in communication with the first opening 21. In this condition the pressurised fluid coming from the source 60, at pressure values of about 30 bar, can reach the actuator 50 for activating the brake 40 which moves into the non-braking configuration.

Now we consider a scenario in which the brake opening command is annulled, which normally happens when the machine is stopped or when no commands are transmitted to the mobile organ 11 (figure 4). In these conditions the third opening 23 is connected to a low-pressure discharge conduit in order that the pressurised fluid supply to the pilot element 4 is stopped. By effect of the pressure exerted by the spring 70, the obturator 3 is brought back towards the first position thereof in which the second opening 22 is in communication with the actuator 50. The pressure inside the actuator 50, determined by the thrust exerted by the elastic means present inside the actuator 50 itself, is transmitted through the through-channel 33 to the front surface 4c of the pilot element 4 which is pushed towards its first position, detaching from the obturator 3 as it moves. The second opening 22, which is connected to the brake-activating actuator 50 is thus in communication with the third opening 23 through the through-channel 33 of the obturator 3, the annular channel 5 and the through-conduit 41 of the pilot element 4. The fluid in the actuator 50, by effect of the thrust exerted by the elastic means of the actuator 3 itself, can thus be discharged from the actuator 3 through the third opening 23, enabling the brake to assume its brake-on configuration. An important advantage of the device is that the discharge of the fluid situated internally of the actuator 50 is done through the choke 42 which opens internally of the annular chamber 5. The choke 42 assumes the function of flow rate regulator. The flow through the choke 42 creates, in the chamber 5, a constant pressure of about 4 bar, which keeps the obturator 3 pushed in a position, close to the first position, in which it partially closes the second opening 22 in such a way that the pressurised fluid in the actuator 50 discharges even more slowly. Thus the element 4 acts as a pressure-reducing valve and maintains a small pressure difference across the orifice 42. This enables a considerable retardation in activation of the brake, guaranteeing the time needed for the mobile organ to stop completely.

During the discharge of the fluid from the actuator 50, should a brake 40 disengagement command be given, sending a pilot pressure to the plot element 4 returns the device into the condition in which the obturator 3 and the pilot device 4 are in the respective second positions, determining the blocking of the brake 40 in the brake-off configuration.

It is important to note that the sending of the pilot pressure to the pilot element 4, as well as the discharge of the fluid from the actuator 50, both occur through the third opening 23, and that the two possibilities are mutually exclusive thanks to the special conformation of the obturator 3 and to the presence and special conformation of the pilot element 4.

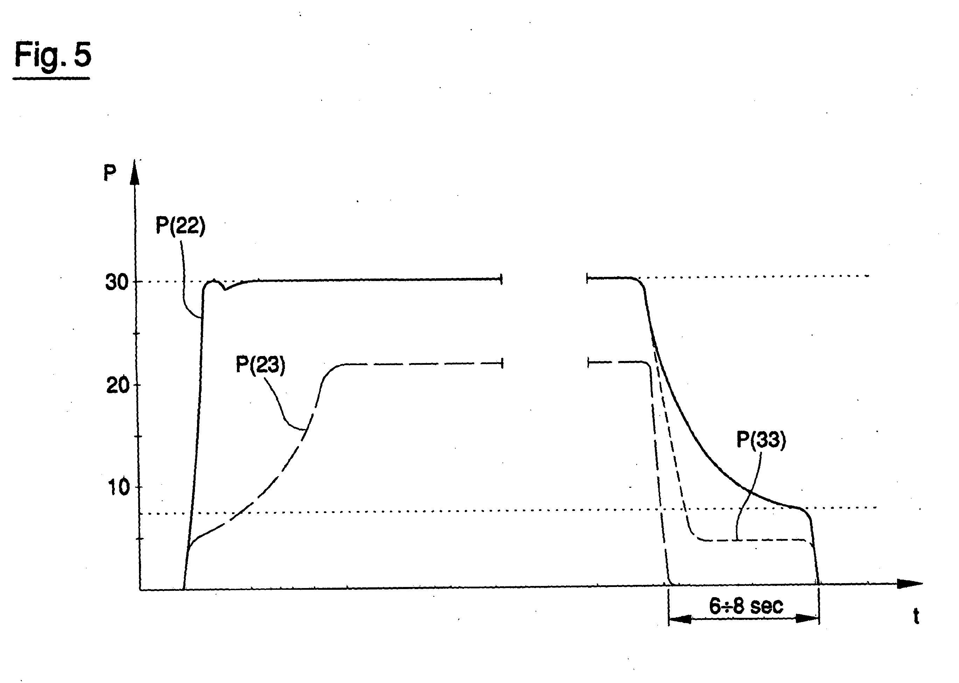

Figure 5 includes a qualitative graph plotting the progress of the pressure at the various device openings: The curve P(22) indicates the pressure at the second opening 22. This curve shows how the pressure rises very rapidly following a start command of the machine and/or the mobile organ 11, up to an approximate value of 30÷35 bar. The brake 40, activated by the actuator 50, moves into the brake-off configuration at pressure values of about 7÷8 bar, i.e. very rapidly. The curve denoted by P(23) indicates the pressure at the third opening 23. Following a start command to the machine and/or the mobile organ 11, the pressure at the third opening 23 rises rapidly up to a value of about 4 bar at which it pilots the displacement of the obturator 3 towards the second position be means of the pilot element 4. Subsequently the pressure rises more slowly. Following a stop command to the machine and/or mobile organ 11, pressure P(23) at the third opening 23 decreases very rapidly, inasmuch as, as mentioned, the third opening 23 is set in communication with a discharge. By effect of the presence of the choke 42, the pressure upstream of the choke 42, in the through-channel 33, is maintained for a determined period of time, at a value close to 4 bar (curve P(33)). The presence of the choke 42, which as mentioned has a flow-rate regulating function, determines a slowing of the fluid discharge from the actuator 50. This means that the pressure P(22) takes about 6÷8 seconds to return below a value of 7÷8 bar at which the brake 40 re-engages.

The device of the present invention offers the important advantage of combining the pilot element 4 and the choke 42 in a single component, so that the supply of the pilot fluid to the element 4, for determining the displacement of the obturator 3 from the first towards the second position, and the controlled discharge of the fluid from the actuator 50, to enable the brake 40 to assume the brake-on configuration, can occur through a same conduit. This confers two important advantages. Firstly, the device enables a considerable simplification of the hydraulic circuit for activating the brake 40. Furthermore, the device offers an intrinsic safety against the possibility that the actuator 50 is connected contemporaneously to a pressurised fluid source and the discharge.

In particular, the device of the invention enables a configuration of a circuit comprising, apart from a hydraulic device 1, a first conduit 6, predisposed to connect the first opening 21 of the device 1 with a pressurised fluid source 60, typically a positive displacement pump.

At least a second conduit 7a, 7b, 7c connects the third opening 23 with a selector device 8 which on command connects the second conduit 7a, 7b, 7c to a pilot fluid source (which is preferably the pressurised fluid source 60) or with a low-pressure discharge. A third conduit 9 connects the second opening 22 of the device 1 with the brake 40 activating device 50.

The supply of pilot fluid to the pilot element 4 and the discharge of the fluid from the actuator 50, thanks to the special conformation of the device 1 according to the invention, occur through a same conduit, i.e. the second conduit 7a, 7b, 7c. Therefore, if the pilot fluid is supplied to the pilot element 4, the actuator 50 cannot be connected to the discharge. Also, if the pilot fluid is not supplied, the actuator 50 is connected to the discharge.

The selector device 8 comprises at least a three-way two-position slide valve which can be operatively connected to a command organ 10 for a hydraulic actuator 11 on which the brake 40 acts. The operative connection between the selector device 8 and the command organ 10 is such that for each activation command sent to the hydraulic actuator 11 by the command organ 10, the selector device 8 places the second conduit 7a, 7b and 6c in connection with the pilot fluid source, while in the absence of commands the selector device 8 places the second conduit 7a, 7b and 7c in connection with the low-pressure discharge.

In a first embodiment, in which the mobile organ 11 distributor 81 command is hydraulic, the selector device 8 is integrated with the command organ 10 and comprises two three-way two-position distribution valves 8a, 8b. Each of the valves is connected to the pressurised fluid source 60, to the third opening 23 of the device and to a discharge conduit.

In each valve 8a, 8b, the connection port with the third opening 23 of the device 1 is also in communication with a pilot side of the distributor 81.

In a first position the distribution valves 8a, 8b block the connection with the source 60 and place the third opening 23 of the device 1 in connection with the discharge conduit. This position corresponds to an absence of commands sent to the mobile organ 11 by the command organ 10. Since in general the command organ 10 controls two opposite movements of the mobile organ 11 by displacing from opposite sides with respect to a neutral central position, the first position of the valves 8a, 8b corresponds to the central position of the command organ 10. By displacing the command organ from the central position towards one side or the other, one of the two valves 8a, 8b is brought into a second position in which it places the pressurised fluid source 60 in connection with the third opening 23 of the device 1 and with a pilot side of the distributor 81, causing the brake 40 to disengage from the mobile organ 11 and thus causing the activating of the mobile organ 11 in one of the two directions of movement. In greater detail, the second conduit of the circuit comprises three tracts 7a, 7b, 7c. Two tracts 7a, 7b fork to connect to a respective valve 8a, 8b, and to a pilot side of the distributor 81. The tracts of connection to the valves 8a, 8b conjoin to a common tract 7c which connects with the third opening 23 of the device 1. A common selector valve 17 is positioned at the junction between the tracts 7a, 7b, 7c to prevent tracts 7a and 7b from connecting contemporaneously to the common tract 7c. A slide valve 8a connects to the third opening 23 of the device 1 by means of a tract 7a and the common tract 7c, while the other valve connects by means of the other tract 7b and the common tract 7c.

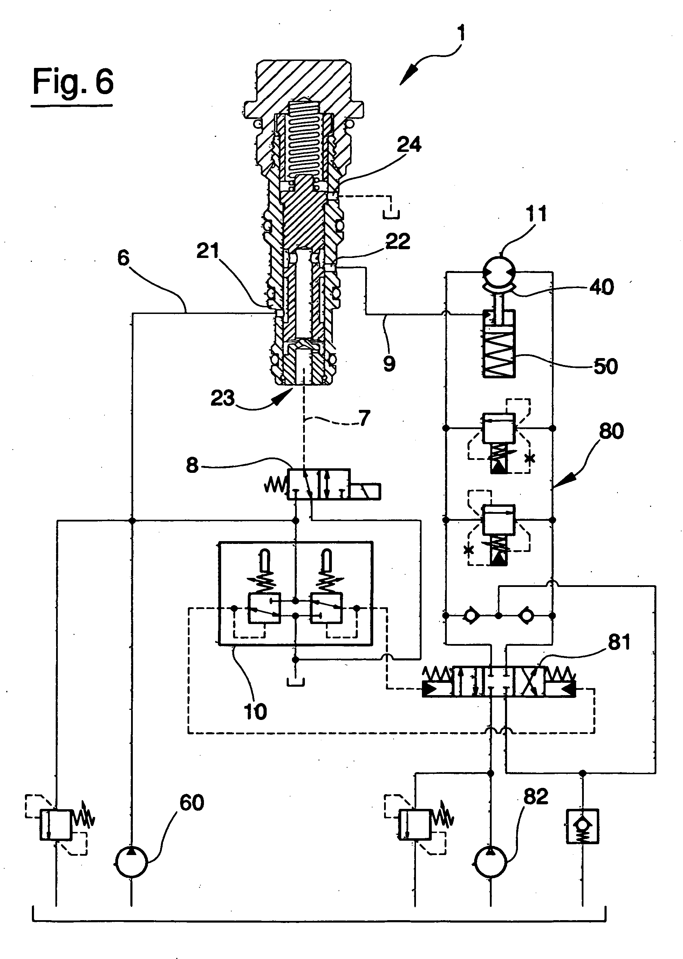

Alternatively, as illustrated in figure 6, the selector device can be electrically commanded, constituted for example by a three-way two-position solenoid valve 8. In this case the two valves 8a, 8b of the command organ act only on the distributor 81 and in effect are not a part of the selector device. In a first position, i.e. in the presence of a command sent by the mobile organ 11, the solenoid places the second conduit 7a, 7b and 7c, in this case constituted by a single conduit 7, in connection with the pilot fluid source, while in the absence of commands the solenoid places the second conduit 7 in connection with the low-pressure discharge. The circuit would be suitable also in a case where the distributor 81 were electrically commanded, in which case the two valves 8a, 8b of the command organ would be replaced by switches.

## Claims

1. A hydraulic device for activating a brake, comprising: a hollow body (2) comprising a first opening (21) for connection to a pressurised fluid source (60), also comprising a second opening (22) for connection to an actuator (50) for activating a brake, also comprising a third opening (23); an obturator (3), mobile internally of the hollow body (2) between at least a first position, in which the first opening (21) and the second opening (22) are not connected to one another, and at least a second position, in which the obturator (3) connects the first opening (21) and the second opening (22) to one another, means for pushing (70) being provided for pushing the obturator (3) from the at least a second position towards the at least a first position; a pilot element (4) predisposed to push the obturator (3) from the at least a first position into the at least a second position when a pilot pressure is sent to the pilot element (4) through the third opening (23), which pilot element (4) is mobile between at least a first position, in which it is not in contact with the obturator (3) and the obturator (3) is free to assume the at least a first position thereof and at least a second position, in which the pilot element (4) is in contact with a striker surface (3c) positioned at an end of the obturator (3) and can push the obturator (3) into the at least a second position thereof; the pilot element (4) being conformed in such a way as to place the second opening (22) in communication with the third opening (23) if it is not in contact with the obturator (3);
wherein the obturator (3) is provided with a through-channel (33) which develops axially internally of the obturator (3) and which extends between the striker surface (3c), in an and a first annular recess (31), external surface of the obturator (3), **characterised in that** the first annular recess (31) is positioned in such a way as at least partially to face the second opening (22) when the obturator (3) is in the at least a first position thereof, such that the second opening (22) is placed in communication with the third opening (23) via the through-channel (33).

2. The device of claim 1, wherein the pilot element (4) is provided with a through-conduit (41) through which the second opening (22) and the third opening (23) are placed in communication.

3. The device of claim 2, wherein the through-conduit (41) is provided with a choke (42).

4. The device of claim 3, wherein the pilot element (4) comprises a first portion (4a), sealedly slidable internally of the hollow body (2), and a second portion (4b), distanced with respect to an inside of the hollow body (2), which second portion (4b) delimits an annular chamber (5) positioned between the obturator (3) and the pilot element (4), in which annular chamber (5) the through-conduit (41) terminates.

5. The device of claim 4, wherein the through-conduit (41) comprises a first tract arranged axially and a second tract, constituted by the choke (42), which opens in the annular chamber (5).

6. The device of claim 5, wherein the annular chamber (5) is in communication with the second opening (22) when the pilot element (4) and the obturator (3) are not in reciprocal contact.

7. The device of claim 6, wherein the pilot element (4) comprises a front surface (4c) predisposed to strike against a striker surface (3c) of the obturator (3) and close the annular chamber (5) with respect to the second opening (22).

8. The device of at least one of the preceding claims, wherein the obturator (3) is sealedly slidable internally of the hollow body (2) and is externally provided with a second annular recess (34) which extends axially by an amount which is sufficient for it to face the first opening (21) and the second opening (22), when the obturator (3) is in the second position, and to face only the first opening (21) when the obturator (3) is in the first position.

9. A hydraulic circuit for activating a brake, comprising: a device (1) as in at least one of the preceding claims; a first conduit (6), predisposed to connect the first opening (21) of the device (1) with a pressurised fluid source (60); a second conduit (7a, 7b, 7c) predisposed to connect the third opening (23) with a selector device (8) which on command connects the second conduit with a pilot fluid source or with a low-pressure discharge; a third conduit (9) which connects the second opening (22) of the device (1) with an actuator (50) for activating a brake (40).

10. The circuit of claim 9, wherein the selector device (8) comprises a three-way two-position slide valve which is operatively connected to a command organ (10) for a mobile organ (11) on which mobile organ (11) the brake acts, in such a way that for each activating command to the mobile organ (11) by means of the command organ (10), the selector device (8) places the second conduit (7a, 7b, 7c) in connection with the pressurised fluid source (60), while in the absence of activating commands sent to the mobile organ (11) by the command organ (10) the selector device (8) places the second conduit (7a, 7b, 7c) in connection with the low-pressure discharge.

## Patentansprüche

1. Hydraulikvorrichtung zur Betätigung einer Bremse, enthaltend: einen Hohlkörper (2), enthaltend eine erste Öffnung (21) für den Anschluss an eine Quelle (60) von unter Druck stehender Flüssigkeit, und ebenfalls enthaltend eine zweite Öffnung (22) für den Anschluss an einen Trieb (50) zur Betätigung einer Bremse, sowie enthaltend eine dritte Öffnung (23); ein Absperrorgan (3), beweglich im Inneren des Hohlkörpers (2) zwischen wenigstens einer ersten Position, in welcher die erste Öffnung (21) und die zweite Öffnung (22) nicht miteinander verbunden sind, und wenigstens einer zweiten Position, in welcher das Absperrorgan (3) die erste Öffnung (21) und die zweite Öffnung (22) miteinander verbindet, wobei Schiebemittel (70) vorgesehen sind, um das Absperrorgan (3) aus wenigstens einer zweiten Position in wenigstens eine erste Position zu verschieben; ein Steuerungselement (4), dazu vorgesehen, das Absperrorgan (3) aus wenigstens einer ersten Position in wenigstens eine zweite Position zu verschieben, wenn durch die dritte Öffnung (23) ein Steuerdruck an das Steuerungselement (4) ausgesandt wird, welches Steuerungselement (4) beweglich ist zwischen einer ersten Position, in welcher es sich nicht im Kontakt mit dem Absperrorgan (3) befindet und das Absperrorgan (3) frei ist, seine wenigstens erste Position einzunehmen, und wenigstens einer zweiten Position, in welcher sich das Steuerungselement (4) im Kontakt mit einer Anschlagfläche (3c) befindet, positioniert an einem Ende des Absperrorgans (3), und das Absperrorgan (3) in wenigstens seine zweite Position verschieben kann; wobei das Steuerungselement (4) auf solche Weise ausgebildet ist, dass es die zweite Öffnung (22) mit der dritten Öffnung (23) in Verbindung bringt, wenn es sich nicht im Kontakt mit dem Absperrorgan (3) befindet; bei welcher das Absperrorgan (3) mit einem durchgehenden Kanal (33) versehen ist, welcher axial im Inneren des Absperrorgans (3) verläuft, und welcher sich zwischen der Anschlagfläche (3c) und einer ersten ringförmigen Vertiefung (31) in einer äusseren Oberfläche des Absperrorgans (3) erstreckt, **dadurch gekennzeichnet, dass** die erste ringförmige Vertiefung (31) auf solche Weise positioniert ist, dass sie wenigstens teilweise der zweiten Öffnung (22) zugewandt ist, wenn sich das Absperrorgan (3) wenigstens in seiner ersten Position befindet, so dass die zweite Öffnung (22) über den durchgehenden Kanal (33) mit der dritten Öffnung (23) in Verbindung gebracht ist.

2. Vorrichtung nach Patentanspruch 1, bei welcher das Steuerungselement (4) mit einer durchgehenden Leitung /41) versehen ist, durch welche die zweite Öffnung (22) und die dritte Öffnung (23) miteinander in Verbindung gebracht werden.

3. Vorrichtung nach Patentanspruch 2, bei welcher die durchgehende Leitung (41) mit einer Drosselung (42) versehen ist.

4. Vorrichtung nach Patentanspruch 3, bei welcher das Steuerungselement (4) einen ersten Abschnitt (4a) enthält, dicht abschliessend im Inneren des Hohlkörpers (2) verschiebbar, sowie einen zweiten Abschnitt (4b), der im Verhältnis zu einer Innenseite des Hohlkörpers (2) einen Abstand hat, welcher zweite Abschnitt (4b) eine ringförmige Kammer (5) abgrenzt, angeordnet zwischen dem Absperrorgan (3) und dem Steuerungselement (4), in welcher ringförmigen Kammer (5) die durchgehende Leitung (41) endet.

5. Vorrichtung nach Patentanspruch 4, bei welcher die durchgehende Leitung (41) einen ersten, axial angeordneten Abschnitt enthält, sowie einen zweiten Abschnitt, gebildet aus der Drosselung (42), welche sich in die ringförmige Kammer (5) öffnet.

6. Vorrichtung nach Patentanspruch 5, bei welcher die ringförmige Kammer (5) mit der zweiten Öffnung (22) in Verbindung steht, wenn sich das Steuerungselement (4) und das Absperrorgan (3) nicht in gegenseitigem Kontakt miteinander befinden.

7. Vorrichtung nach Patentanspruch 6, bei welcher das Steuerungselement (4) eine Frontfläche (4c) aufweist, dazu bestimmt, gegen eine Anschlagfläche (3c) des Absperrorgans (3) anzuschlagen und die ringförmige Kammer (5) im Verhältnis zu der zweiten Öffnung (22) zu verschliessen.

8. Vorrichtung nach wenigstens einem der vorstehenden Patentansprüche, bei welcher das Absperrorgan (3) dicht abschliessend im Inneren des Hohlkörpers (2) verschiebbar und aussen mit einer zweiten ringförmigen Vertiefung (34) versehen ist, welche sich axial um eine Menge erstreckt, welche ausreichend für sie ist, der ersten Öffnung (21) und der zweiten Öffnung (22) zugewandt zu sein, wenn sich das Absperrorgan (3) in der zweiten Position befindet, und nur der ersten Öffnung (21) zugewandt zu sein, wenn sich das Absperrorgan (3) in der ersten Position befindet.

9. Hydraulikkreis zur Betätigung einer Bremse, enthaltend: eine Vorrichtung (1) nach wenigstens einem der vorstehenden Patentansprüche; eine erste Leitung (6), dazu vorgesehen, die erste Öffnung (21) der Vorrichtung (1) mit einer Quelle (60) von unter Druck stehender Flüssigkeit zu verbinden; eine zweite Leitung (7a, 7b, 7c), dazu vorgesehen, die dritte Öffnung (23) mit einer Wahlvorrichtung (8) zu verbinden, welche auf einen Befehl hin die zweite Leitung mit einer Quelle der Steuerflüssigkeit oder mit einem Niederdruck-Ablass verbindet; eine dritte Leitung (9), welche die zweite Öffnung (22) der Vorrichtung (1) mit einem Trieb (50) zur Betätigung einer Bremse (40) verbindet.

10. Hydraulikkreis nach Patentanspruch 9, bei welchem die Wahlvorrichtung (8) einen Dreiwegschieber mit zwei Positionen enthält, welcher betrieblich an ein Antriebsorgan (10) für ein bewegliches Element (11) angeschlossen ist, welches bewegliche Element (11) die Bremse betätigt, und zwar auf solche Weise, dass bei jedem Betätigungsbefehl an das bewegliche Element (11) durch das Antriebsorgan (10) die Wahlvorrichtung (8) die zweite Leitung (7a, 7b, 7c) mit der Quelle (60) der unter Druck stehenden Flüssigkeit in Verbindung bringt, während bei Fehlen der durch das Antriebsorgan (10) an das bewegliche Element (11) ausgesandten Betätigungsbefehle die Wahlvorrichtung (8) die zweite Leitung (7a, 7b, 7c) mit dem Niederdruck-Ablass in Verbindung bringt.

## Revendications

1. Dispositif hydraulique d'actionnement de frein, comprenant: un corps creux (2) comprenant une première ouverture (21) pour la connexion à une source de fluide sous pression (60), comprenant également une seconde ouverture (22) pour la connexion à un actionneur (50) d'actionnement d'un frein, comprenant également une troisième ouverture (23); un obturateur (3), mobile à l'intérieur du corps creux (2) entre au moins une première position, dans laquelle la première ouverture (21) et la seconde ouverture (22) ne sont pas connectées entre elles, et au moins une seconde position, dans laquelle l'obturateur (3) connecte l'une à l'autre la première ouverture (21) et la seconde ouverture (22), des moyens de poussée (70) étant prévus pour pousser l'obturateur (3) de l'au moins une seconde position vers l'au moins une première position; un élément de pilotage (4) prédisposé pour pousser l'obturateur (3) de l'au moins une première position à l'au moins une seconde position lorsqu'une pression de pilotage est envoyée vers l'élément de pilotage (4) au travers de la troisième ouverture (23), lequel élément de pilotage (4) est mobile entre au moins une première position, dans laquelle il n'est pas en contact avec l'obturateur (3) et ce dernier est libre d'assumer l'au moins une première position, et au moins une seconde position, dans laquelle l'élément de pilotage (4) est en contact avec une surface de butée (3c) positionnée en correspondance d'une extrémité de l'obturateur (3) et peut pousser l'obturateur (3) dans l'au moins une seconde position; l'élément de pilotage (4) étant conformé de manière à mettre la seconde ouverture (22) en communication avec la troisième ouverture (23) s'il n'est pas en contact avec l'obturateur (3);
dans lequel l'obturateur (3) est pourvu d'un canal passant (33) qui se développe axialement à l'intérieur de l'obturateur (3) et qui s'étend entre la surface de butée (3c) et un premier renfoncement annulaire (31), externe à l'obturateur (3), **caractérisé en ce que** le premier renfoncement annulaire (31) est positionné de manière à faire face au moins partiellement à la seconde ouverture (22) lorsque l'obturateur (3) se trouve l'au moins une première position, de manière à ce que la seconde ouverture (22) soit mise en communication avec la troisième ouverture (23) au travers du canal passant (33).

2. Dispositif selon la revendication 1, dans lequel l'élément de pilotage (4) est pourvu d'un canal passant (41) au travers duquel la seconde ouverture (22) et la troisième ouverture (23) sont mises en communication.

3. Dispositif selon la revendication 2, dans lequel le conduit passant (41) est pourvu d'un étranglement (42).

4. Dispositif selon la revendication 3, dans lequel l'élément de pilotage (4) comprend une première portion (4a), coulissante de manière étanche à l'intérieur du corps creux (2), et une seconde portion (4b), éloignée par rapport à l'intérieur du corps creux (2), laquelle seconde portion (4b) délimite une chambre annulaire (5) positionnée entre l'obturateur (3) et l'élément de pilotage (4), dans laquelle chambre annulaire (5) se termine le conduit passant (41).

5. Dispositif selon la revendication 4, dans lequel le conduit passant (41) comprend une première zone disposée axialement et une seconde zone, constituée par l'étranglement (42), qui s'ouvre dans la chambre annulaire (5).

6. Dispositif selon la revendication 5, dans lequel la chambre annulaire (5) est en communication avec la seconde ouverture (22) lorsque l'élément de pilotage (4) et l'obturateur (3) ne sont pas en contact réciproque.

7. Dispositif selon la revendication 6, dans lequel l'élément de pilotage (4) comprend une surface frontale (4c) prédisposée pour butter contre une surface de butée (3c) de l'obturateur (3) et fermer la chambre annulaire (5) par rapport à la seconde ouverture (22).

8. Dispositif selon au moins l'une des revendications précédentes, dans lequel l'obturateur (3) est coulissant de manière étanche à l'intérieur du corps creux (2) et est extérieurement pourvu d'un second renfoncement annulaire (34) qui s'étend axialement sur une longueur suffisante pour lui permettre de faire face à la première ouverture (21) et à la seconde ouverture (22), lorsque l'obturateur (3) se trouve dans la seconde position, et pour faire face seulement à la première ouverture (21) lorsque l'obturateur (3) se trouve dans la première position.

9. Circuit hydraulique d'actionnement d'un frein, comprenant: un dispositif (1) comme dans un moins l'une des revendications précédentes; un premier conduit (6), prédisposé pour connecter la première ouverture (21) du dispositif (1) à une source de fluide sous pression (60); un second conduit (7a, 7b, 7c) prédisposé pour connecter la troisième ouverture (23) à un dispositif sélecteur (8) qui connecte sur commande le second conduit à une source de fluide de pilotage ou à une évacuation à basse pression; un troisième conduit (9) qui connecte la seconde ouverture (22) du dispositif (1) à un actionneur (50) d'activation d'un frein (40).

10. Circuit selon la revendication 9, dans lequel le dispositif sélecteur (8) comprend une valve de distribution à trois voies et deux positions qui est opérationnellement connectée à un organe de commande (10) pour un organe mobile (11) sur lequel organe mobile (11) agit le frein, de manière à ce que, pour chaque commande d'activation vers l'organe mobile (11) au moyen de l'organe de commande (10), le dispositif sélecteur (8) mette le second conduit (7a, 7b, 7c) en connexion avec la source de fluide sous pression (60), alors qu'en l'absence de commandes d'actionnement envoyées à l'organe mobile (11) par l'organe de commande (10) le dispositif sélecteur (8) met le second conduit (7a, 7b, 7c) en connexion avec l'échappement à basse pression.
